# EUROPÄISCHE PATENTSCHRIFT

(11) **EP 2 652 224 B1**
(45) Veröffentlichungstag und Bekanntmachung des Hinweises auf die Patenterteilung: **11.10.2017**
(21) Anmeldenummer: 11799670.2
(22) Anmeldetag: 14.12.2011
(51) Int. Cl.: B32B 7/12, E04D 5/06, E04D 5/14, B32B 27/08, B32B 27/32, E04B 1/66

(54) **VERWENDUNG NICHT-REAKTIVEN HEISSSCHMELZKLEBSTOFF-BESCHICHTETER POLYOLEFIN-ABDICHTUNGSFOLIEN ZUM ABDICHTEN**
USE OF POLYOLEFIN SEALING FILMS COATED WITH NON-REACTIVE HOT-MELT ADHESIVE FOR SEALING
UTILISATION DE FILMS DE REVÊTEMENT EN POLYOLÉFINE REVÊTUS D'ADHÉSIF THERMOFUSIBLE NON RÉACTIF À DES FINS D'ÉTANCHÉIFICATION

(30) Priorität: 17.12.2010 EP 10195793
(43) Veröffentlichungstag der Anmeldung: 23.10.2013
(73) Patentinhaber: Sika Technology AG, 6340 Baar (CH)
(72) Erfinder: LINNENBRINK, Martin, 21641 Apensen (DE); JANKE, Doreen, 25486 Alveslohe (DE)
(74) Vertreter: Sika Patent Attorneys
(86) Internationale Anmeldenummer: PCT/EP2011/072793
(87) Internationale Veröffentlichungsnummer: WO 2012/080353

(56) Entgegenhaltungen:
- EP-A- 1 728 807
- EP-A- 2 075 297
- EP-A- 2 145 907

## Beschreibung

### Technisches Gebiet

Die Erfindung betrifft das Gebiet der Abdichtungen von Bauwerken des Tiefbaus oder Hochbaus sowie das Gebiet der Heissschmelzklebstoffe.

### Stand der Technik

Polyolefin-Abdichtungsfolien sind seit längerem bekannt. Sie werden auch seit langem für das Abdichten von Dächern und Dachstrukturen verwendet. Traditionell werden derartige Folien als Abdichtungsbahnen auf dem Dach verlegt und miteinander verschweisst. Für das Befestigen derartiger Bahnen kommen bisher primär mechanische Verankerungen, z. B. Nägel, zum Einsatz. Hierbei ist natürlich die Gewährleistung der Dichtheit ein grosses Problem.

Polyolefin-Abdichtungsfolien lassen sich jedoch sehr schwierig verkleben. Bestehende Systeme sind sehr aufwendig und deshalb vielfach nachteilig. Für das Kaschieren von Polyolefinen werden bisher reaktive Heissschmelzklebstoffe eingesetzt, wie es in WO 2009/133093 A offenbart wird, wo bisher reaktive Heissschmelzklebstoffe basierend auf silangepfropften Poly-α-olefinen hierfür eingesetzt werden. In der EP2145907 A1 wird eine reaktive Heissschmelzklebstoffzusammensetzung enthaltend mindestens ein amorphes, bei Raumtemperatur festes Polyurethanpolymer beschrieben, welche Klebstoffzusammensetzung sich besonders für das Verkleben von transparenten Substraten eignet. Die EP 2075297 A1 beschreibt reaktive Heissschmelzklebstoffe, welche insbesondere für das Verkleben von Polyolefinfolien geeignet sind aber keine oder nur eine geringe Halftung auf Teflon aufweisen. Diese Klebstoffe sind jedoch sehr teuer.

### Darstellung der Erfindung

Die Aufgabe der vorliegenden Erfindung ist es, ein Verfahren zur Verfügung zu stellen, welches es erlaubt, ein Bauwerk des Tiefbaus oder Hochbaus verlässlich und kosteneffizient abzudichten.

Überraschenderweise wurde gefunden, dass ein Verfahren gemäss Anspruch 1 diese Aufgabe zu lösen vermag. Insbesondere erlaubt es dieses Verfahren auf sehr einfache Art und Weise einen bisher lang gehegten Wunsch, nämlich eine vollflächige und langfristige Verklebung einer flexiblen Polyolefin-Bahn mit einem Substrat, insbesondere einem Dach oder einer Dachstruktur, zu realisieren und damit eine optimale Abdichtung zu erreichen. Es wurde überraschenderweise gefunden, dass nicht-reaktive Heissschmelzklebstoffzusammensetzungen, bestens für die Lösung dieses Problems geeignet sind. Als besonders vorteilhaft hat sich gezeigt, dass mit derartigen nicht-reaktiven Heissschmelzklebstoffzusammensetzungen beschichtete flexible Polyolefin-Folien klebfrei sind und deshalb auch über längerer Zeit gelagert, insbesondere in Form von Rollen, werden können. Bei Bedarf lassen sie sich beim Kontaktieren mit dem abzudichtenden Substrat über das Zuführen von Wärme und anschliessendem Abkühlen mit dem Substrat verbinden, so dass ein Schichtverbundkörper gebildet werden kann. Es hat sich gezeigt, dass dieses Verfahren äusserst schnell zu einem Klebverbund führt, so dass nach einigen Minuten bereits hohe Kräfte zwischen Polyolefinbahn und dem damit verklebten Substrat übertragen werden können. Dieser schnelle Festigkeitsaufbau ist dahingehend vorteilhaft, dass für die Verklebung keine mechanischen Fixierungsmittel wie Klemmen oder dergleichen benötigt werden. Zudem sind diese für die vorliegenden Erfindung geeigneten nicht-reaktiven Heissschmelzklebstoffzusammensetzungen bedeutend kostengünstiger als die reaktiven Heissschmelzklebstoff, welche für das verkleben von Polyolfinen bisher im Stand der Technik eingesetzt wurden.

Die in diesem Dokument offenbarten Abdichtungsfolien lassen sich einfach produzieren, sind über längere Zeiträume lager- und transportfähig und lassen sich auf äusserst einfache Art und Weise verlegen und verkleben. Insbesondere werden für das Verlegen und Fixieren keinen mechanischen Befestigungsmittel, wie Nägel oder dergleichen, benötigt. Dies reduziert die Anfälligkeiten für Folien für Verletzungen. Demzufolge sind Quellen einer Undichtheit massiv vermindert.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Die vorliegende Erfindung betrifft in einem ersten Aspekt ein Verfahren gemäß Anspruch 1 zum Abdichten eines Bauwerkes des Tiefbaus oder Hochbaus. Dieses Verfahren umfasst die Schritte
a) Beschichten einer flexiblen Polyolefin-Abdichtungsfolie mit einer nicht-reaktiven Heissschmelzklebstoffzusammensetzung unter Bildung einer Heissschmelzklebstoffzusammensetzung-beschichteten Polyolefin-Abdichtungsfolie, welche bei 25°C klebfrei ist;
b) Auflegen der Heissschmelzklebstoffzusammensetzung-beschichteten Polyolefin-Abdichtungsfolie auf die Oberfläche eines Bauwerkes des Tiefbaus oder Hochbaus;
c) Zuführen von Wärme unter Anschmelzen der nicht-reaktiven Heissschmelzklebstoffzusammensetzung;
d) Abkühlen der nicht-reaktiven Heissschmelzklebstoffzusammensetzung unter Bildung eines Klebverbundes zwischen flexibler Polyolefin-Abdichtungsfolie und der Oberfläche des Bauwerkes.

Als "Abdichtungsfolie" werden in diesem Dokument flexible, d.h. biegsame, flächige Kunststoffe insbesondere in einer Dicke von 0.05 Millimeter bis 5 Millimeter verstanden, die sich aufrollen lassen. Somit werden neben Folien im strengen Sinn von Dicken unter 1 mm, auch, und zwar vorzugsweise, Abdichtungsbahnen, wie sie typischerweise zum Abdichten von Tunnels, Dächern oder Schwimmbädern in einer Dicke von typischerweise 1 bis 3 mm, in Spezialfällen sogar in einer Dicke bis maximal 5 mm, verwendet werden, verstanden. Derartige Folien werden üblicherweise durch Streichen, Giessen, Kalandrieren oder Extrusion hergestellt und sind typischerweise in Rollen kommerziell erhältlich oder werden vor Ort hergestellt. Sie können einschichtig oder mehrschichtig aufgebaut sein. Es ist dem Fachmann klar, dass auch Folien noch andere Zusatzstoffe und Verarbeitungsmittel, wie Füllstoffe, UV- und Hitzestabilisatoren, Weichmacher, Gleitmittel, Biozide, Flammschutzmittel, Antioxidantien, Pigmente wie z.B. Titandioxid oder Russ, und Farbstoffe enthalten können. Das heisst, es werden in diesem Dokument auch derartige Folien als Polyolefin-Folien bezeichnet, welche nicht zu 100% aus Polyolefin bestehen.

Als flexible Polyolefin-Abdichtungsfolie oder -Abdichtungsfolie ist insbesondere eine für das Gebiet der Abdichtung von Gebäuden übliche Polyolefin-Abdichtungsfolie geeignet. Derartige Polyolefin-Folien enthalten insbesondere Weichmacher.

Die flexiblen Polyolefin-Abdichtungsfolien basieren auf flexiblen Polyolefinen, dem Fachmann auch als "FPO" bekannt. Derartige flexible Polyolefine sind Homo- oder Copolymere von Olefinen, insbesondere von Ethylen und Propylen. Um als Abdichtungsfolie im Praxis eingesetzt werden zu können, ist es wichtig, dass diese Polyolefine flexible sind. Die Verwendung von starren Polyolefinen würde dazu führen, dass beim Biegen bzw. Umbiegen der Folie, wie sie beim Aufbringen der Folie aber auch im Gebrauch, beispielsweise durch Temperaturschwankungen, mechanische Belastungen, wie z.B. beim Begehen oder Befahren der Folie, erfolgen, brechen oder zumindest einreissen würden, wodurch die Abdichtfunktion nicht gewährleistet werden könnte. Zudem ist es in der Praxis fast unumgänglich, dass die Abdichtungsfolie in Rollenform auf die Baustelle geliefert werden muss. Ein starres Polyolefin kann jedoch nicht gerollt werden.

Um die Mechanik der flexiblen Polyolefin-Abdichtungsfolie zu optimieren, ist es vorteilhaft, wenn die Abdichtungsfolie durch Fasern verstärkt ist. Es ist besonders vorteilhaft, wenn die Polyolefin-Abdichtungsfolie durch Fasern verstärkt ist. Die Verstärkung durch Fasern kann in Form von losen Fasern oder-bevorzugt-durch flächige Faserngebilde, erfolgen. Vorzugsweise erfolgt die Verstärkung durch Fasern so, dass die PVC-Abdichtungsfolie mit einer Fasermatte, einem Fasergelege, einem Faservlies, einem Fasergittergelege oder einem Fasergewebe verstärkt ist.

Es ist bevorzugt, dass die die flexible Polyolefin-Abdichtungsfolie mit einem Gewebe verstärkt ist.

Als Fasern sind insbesondere Glas-, Kohlenstoff-, Zellulose-, Baumwoll- oder synthetische Kunststofffasern, bevorzugt Fasern aus Polyester oder aus einem Homo- oder Copolymeren von Ethylen und/oder Propylen oder aus Viskose geeignet. Je nach Ausgestaltungsform können die Fasern als Kurzfasern oder Langfasern, oder in Form von gesponnenen, gewobenen oder ungewobenen Faserwerkstoffen zum Einsatz kommen. Die Verwendung von Fasern ist insbesondere zur Verbesserung der mechanischen Verstärkung von Vorteil, insbesondere dann, wenn zumindest ein Teil der Fasern aus zugfesten oder hochzugfesten Fasern, insbesondere aus Glas oder Aramide, bestehen. Als Fasern sind meist bevorzugt Glasfasern oder Polyesterfasern.

Besonders bevorzugt sind flexible Polyolefin-Abdichtungsfolien, welche mit einem Glasvlies und/oder Glas- oder Polyester-Gittergelege verstärkt sind.

Besonders geeignete flexible Polyolefin-Abdichtungsfolie sind die von Sika Sarnafil AG, Schweiz, angebotenen Produktelinien Sarnafil® TG und Sarnafil® TS, insbesondere Sarnafil® TS 77-15, TS 77-18 und TS-20, sowie der Produktelinien Sikaplan® WT.

Als Bauwerk des Tiefbaus oder Hochbaus gelten insbesondere Gebäude, Häuser, Stützwände, Dächer, Tunnels oder Brücken. Besonders bevorzugt als Bauwerk des Tiefbaus oder Hochbaus sind Dächer, insbesondere Flachdächer.

Als "nichtreaktive" Heissschmelzklebstoffzusammensetzung gilt in diesem Dokument eine Heissschmelzklebstoffzusammensetzung, welche keine Polymere aufweist, die chemisch miteinander weder bei Raumtemperatur noch bei der Schmelztemperatur reagieren und zu höher molekularen Spezies führen würden. Derartige nichtreaktive Heissschmelzklebstoffzusammensetzung weisen insbesondere keine Isocyanat- oder Alkoxysilan- oder Epoxid- oder (Meth)acrylat-Gruppen aufweisende Polymere auf.

Die nichtreaktive Heissschmelzklebstoffzusammensetzung enthält somit keine Epoxidharze, insbesondere keine Epoxidfestharze.

Als "Heissschmelzklebstoffzusammensetzung" gilt in diesem Dokument eine Zusammensetzung, welche bei 25°C fest ist, beim Erhitzen auf die Schmelztemperatur schmilzt und somit fliessfähig wird. Eine derartige Heissschmelzklebstoffzusammensetzung ist in der Lage bei einer Applikationstemperatur, welche über dem Schmelzpunkt der Heissschmelzklebstoffzusammensetzung liegt auf ein Substrat appliziert zu werden und sich beim Abkühlen wieder zu verfestigen und dadurch eine Haftkraft mit dem Substrat aufzubauen. Aufgrund der Tatsache, dass es sich bei der vorliegenden Erfindung bei der Heissschmelzklebstoffzusammensetzung um eine nichtreaktive Heissschmelzklebstoffzusammensetzung handelt, schmilzt der Heissschmelzklebstoffzusammensetzung beim Erhitzen auf die Schmelztemperatur wieder auf, wodurch der Klebverbund sich wieder lösen lässt.

Als "Raumtemperatur" wird im vorliegenden Dokument eine Temperatur von 25°C verstanden.

Unter dem "Schmelzpunkt" wird im vorliegenden Dokument der Erweichungspunkt gemessen nach der Ring & Kugel-Methode gemäss DIN EN 1238, verstanden.

Unter "anschmelzen" bzw. "Anschmelzen" wird im vorliegenden Dokument das Erwärmen der Heissschmelzklebstoffzusammensetzung auf eine Temperatur, welche über der sogenannten Crossover-Temperatur ("*T_{crossover}*") liegt und welche unter dem Erweichungspunkt, gemessen nach der Ring & Kugel-Methode gemäss DIN EN 1238, liegt.

Die Crossover-Temperatur, vielfach auch als Fliessgrenze bezeichnet, stellt diejenige Temperatur dar, bei der sich die Kurven des Verlustmoduls und Speichermodul, gemessen mittels DTMA (Dynamisch-Mechanisch-Thermische Analyse) schneiden. Im Rahmen dieser Erfindung wird für die Bestimmung der Crossover-Temperatur mittels DTMA Messungen die folgenden DTMA-Messparameter verwendet:
Gerät: Anton Paar MCR 300 SN 616966
Software US V2.3
Stempel: 25 mm Platte (glatte Oberfläche)
Messspalt: (Probendicke) 1mm
Temperatur-Rampe: 200°C - 90°C mit -1°C/min
Frequenz der Oszillation: 1 Hz
Amplituden gamma: 1% (entspricht 0.8 mrad)

Das Anschmelzen erfolgt typischerweise bei einer Temperatur, die wesentlich, d.h. mindestens 20°C, insbesondere mindestens 30°C, bevorzugt mindestens 40°C, unterhalb des Erweichungspunktes liegt.

In Schritt a) des Verfahrens wird eine flexible Polyolefin-Abdichtungsfolie mit einer nicht-reaktiven Heissschmelzklebstoffzusammensetzung beschichtet.

Hierfür wird nicht-reaktive Heissschmelzklebstoffzusammensetzung über die Schmelztemperatur aufgeheizt, so dass sich die Heissschmelzklebstoffzusammensetzung verflüssigt und bei der Applikationstemperatur auf die flexible Polyolefin-Abdichtungsfolie aufgetragen.

Die Schmelztemperatur der Heissschmelzklebstoffzusammensetzung sollte möglichst so hoch sein, dass sie mindestens über die im Gebrauch der Abdichtungsfolie auftretenden Temperaturen liegt. Für das Abdichten eines Bauwerkes des Tiefbaus oder Hochbaus ist es somit bevorzugt, dass die Schmelztemperatur der nicht-reaktiven Heissschmelzklebstoffzusammensetzung zwischen 80 und 200°C, insbesondere zwischen 130 und 180°C liegt.

Die Applikationstemperatur wird typischerweise so gewählt, dass die Viskosität der geschmolzenen Heissschmelzklebstoffzusammensetzung eine gute Applikation mit bei Heissschmelzklebstoffen üblicherweise verwendeten Applikationsgeräten erfolgt. Somit wird die Applikationstemperatur so gewählt, dass die Viskosität vorzugsweise zwischen 1'500 - 40'000 mPa•s, gemessen nach Brookfield Thermosel, liegt. Wird eine zu hohe Applikationstemperatur verwendet, wird der Klebstoff oder die flexible Polyolefin-Abdichtungsfolie thermisch in einem nicht akzeptierbaren Ausmass geschädigt. Somit liegt die Applikationstemperatur vorzugsweise unter 200°C, vorzugsweise unter 190°C.

Die Applikation der aufgeschmolzenen nicht-reaktiven Heissschmelzklebstoffzusammensetzung auf die flexible Polyolefin-Abdichtungsfolie erfolgt bei der oben beschriebenen Applikationstemperatur vorzugsweise durch Aufrakeln, Besprühen, Bestreichen, Aufstempeln, Aufwalzen, Aufgiessen, Aufpinseln, Aufrollen, Eintauchen oder Aufextrudieren.

Der Auftrag der aufgeschmolzenen nicht-reaktiven Heissschmelzklebstoffzusammensetzung auf die flexible Polyolefin-Abdichtungsfolie muss nicht zwangsläufig auf eine bereits vorgängig hergestellte flexible Polyolefin-Abdichtungsfolie erfolgen, sondern kann auch direkt beim Herstellen der flexible Polyolefin-Abdichtungsfolie erfolgen, beispielsweise durch ein Koextrudieren von flexiblem Polyolefin und nicht-reaktiver Heissschmelzklebstoffzusammensetzung. Somit wird auch ein derartiges Koextrudieren von flexiblem Polyolefin und nicht-reaktiver Heissschmelzklebstoffzusammensetzung als "Beschichten einer flexiblen Polyolefin-Abdichtungsfolie" im Sinne der vorliegenden Erfindung verstanden.

Das Auftragen der nicht-reaktiver Heissschmelzklebstoffzusammensetzung kann vollflächig, rastermässig oder mit einem speziellen Muster erfolgen.

Durch das Auftragen der nicht-reaktiver Heissschmelzklebstoffzusammensetzung wird eine Heissschmelzklebstoff-beschichtete Polyolefin-Abdichtungsfolie gebildet, welche bei 25°C klebfrei ist.

Um die schnelle Abkühlung auf Raumtemperatur zu beschleunigen, kann die applizierte nicht-reaktiver Heissschmelzklebstoffzusammensetzung mit einem Abkühlmittel, wie beispielsweise durch Anblasen mit kalter Luft oder durch ein Kühlen der Folie durch Auflegen der Folie auf einen vorgekühlten oder aktiv bekühlten Kühlkörper Kontaktieren abgekühlt werden.

Die derart hergestellte Heissschmelzklebstoff-beschichtete Polyolefin-Abdichtungsfolie kann nun je nach Bedarf abgelängt, abgeschnitten, aufgerollt oder direkt weiter verarbeitet werden. Die Rollen mit den beschichteten Kunststoff-Folien können nun je nach Bedarf gelagert oder transportiert werden.

Der Schritte a) erfolgt vorzugsweise in einem industriellen Prozess in einem Folienwerk und die Heissschmelzklebstoff-beschichtete Polyolefin-Abdichtungsfolie gelangt auf der Baustelle vorzugsweise in Form von Heissschmelzklebstoff-beschichtete Polyolefin-Abdichtungsfolie ab einer Rolle zum Einsatz. Die ist dahingehend vorteilhaft, als das Aufbringen der nicht-reaktiven Heissschmelzklebstoffzusammensetzung nicht auf der Baustelle erfolgen muss, was auf Grund der hohen Applikationstemperaturen und der damit verbundenen Gefahr von Feuer und Verbrennungen arbeits- und sicherheitstechnisch sehr vorteilhaft ist. Zudem muss auf den Baustellen nicht gewartet werden, bis der Heissschmelzklebstoff aufgebracht und abgekühlt ist und erlaubt somit ein stark beschleunigtes Arbeiten auf der Baustelle. Aufgrund der Eigenschaft, dass die Heissschmelzklebstoff-beschichtete Polyolefin-Abdichtungsfolie klebfrei ist, lässt sich die beschichtete Folie einfach aufrollen und so als Rolle platzsparend lagern und transportieren und bei Bedarf wieder abrollen. Vorzugsweise verkleben einzelne Schichten auf der Rolle nicht miteinander, d.h. vorzugsweise entsteht bei der, vor allem langen, Lagerung kein Blocken der Rolle. In gewissen -nicht bevorzugten- Fällen kann es jedoch angezeigt sein, das Blocken durch ein Auflegen eines Trennpapieres, insbesondere eines silikoniserten Trennpapieres, auf die beschichtete Folie vordem Rollen, vollständig zu verhindern.

Nicht-reaktive Heissschmelzklebstoffzusammensetzungen sind bei Raumtemperatur fest und schmelzen bei Erhitzung über den Schmelzpunkt auf und werden flüssig. Genaugenommen kann man bei einem Polymer jedoch nicht von einem "Schmelzpunkt" reden. Deshalb wird in diesem Dokument der unter "Schmelzpunkt" der Erweichungspunkt gemessen nach der Ring & Kugel-Methode gemäss DIN EN 1238, verstanden. Die geschmolzene Heissschmelzklebstoffzusammensetzungen wird typischerweise bei einer Temperatur, welche höher, typischerweise mindestens 20°C höher, als der Erweichungspunkt ist, appliziert. Diese als "Applikationstemperatur" bezeichnete Temperatur liegt typischerweise zwischen 140 bis 200°, zwischen 150 bis 180°C. Bei der Applikationstemperatur verfügt der Klebstoff über eine Viskosität, welche eine einfache Applikation ermöglicht. Die Viskosität, bestimmt nach Brookfield Thermosel, beträgt vorzugsweise in diesem Temperaturbereich 1'500 - 50'000 mPa•s. Ist sie wesentlich höher, ist die Applikation sehr schwierig. Ist sie wesentlich tiefer, ist der Klebstoff so dünnflüssig, so dass er bei der Applikation von der zu verklebenden Werkstoffoberfläche wegläuft, bevor er aufgrund des Abkühlens sich verfestigt. Insbesondere bevorzugt beträgt die Viskosität, bestimmt nach Brookfield Thermosel, im Temperaturbereich von 150 bis 180 °C 2'500 - 20'000 mPa•s.

Nicht geeignet als nicht-reaktive Heissschmelzklebstoffzusammensetzungen sind solche, welche bei 25°C klebrig sind. Ob ein Heissschmelzklebstoffzusammensetzung klebrig ist oder nicht kann einerseits leicht mit einem Antippen der Oberfläche mit einem Finger festgestellt werden. In Zweifelsfällen kann Kreidepulver auf die Oberfläche eines 25°C warmen nicht-reaktiven Heissschmelzklebstoffes aufgestreut werden, anschliessend die Oberfläche gekippt werden, so dass das Kreidepulver abfällt. Falls an der Oberfläche noch restliches Kreidepulver visuell sichtbar haften bleibt, gilt der Klebstoff als klebrig.

Als Heissschmelzklebstoffzusammensetzung geeignet sind in einer bevorzugten Ausführungsform solche, welche ein bei 25°C festes thermoplastisches Poly-α-olefin, bevorzugt ein ataktisches Poly-α-olefin (APAO), ist, insbesondere in einer Menge von mehr als 50 Gew.-%, bevorzugt von mehr als 60 Gew.-%, bezogen auf die Menge der nicht-reaktiven Heissschmelzklebstoffzusammensetzung, aufweisen.

Unter einem "α-Olefin" wird in diesem Dokument in üblicher Definition ein Alken der Summenformel CₓH₂ₓ (x entspricht der Anzahl Kohlenstoffatome) verstanden, welches eine C-C-Doppelbindung am ersten Kohlenstoffatom (α-Kohlenstoff) aufweist. Beispiele für α-Olefine sind Ethylen, Propylen, 1-Buten, 1-Penten, 1-Hexen, 1-Hepten und 1-Octen. Somit stellen beispielsweise weder 1,3-Butadien noch 2-Buten oder Styrol α-Olefine im Sinne dieses Dokumentes dar.

Unter "Poly-α-olefinen" werden in diesem Dokument in üblicher Definition Homopolymere aus α-Olefinen und Copolymere aus mehreren verschiedenen α-Olefinen verstanden. Ataktische Poly-α-olefine (APAO Sie weisen im Vergleich zu anderen Polyolefinen eine amorphe Struktur auf. Bevorzugt weisen diese ataktischen Poly-α-olefine einen Erweichungspunkt von über 90°C, insbesondere zwischen 90°C und 130°C auf. Das Molekulargewicht Mₙ beträgt insbesondere zwischen 7'000 und 25'000 g/mol. Besonders bevorzugte ataktische Poly-α-olefine sind unter dem Handlesnamen Vestoplast® von Degussa erhältlich.

Besonders bevorzugt sind Propylen-reiche ataktisches Poly-α-olefine sowie teilkristalline Propylene-Ethylen-Butylen-Terpolymere.

In einer weiteren Ausführungsform enthält die nicht-reaktive Heissschmelzklebstoffzusammensetzung ein bei 25°C festes Copolymer, welches aus der radikalischen Polymerisation von mindestens zwei Monomeren mit mindestens einer, vorzugsweise einer, ungesättigten C=C-Doppelbindung erhalten wird, bevorzugt ein Ethylen/Vinylacetat-Copolymer, enthält, insbesondere in einer Menge von mehr als 50 Gew.-%, bevorzugt von mehr als 60 Gew.-%, bezogen auf die Menge der nicht-reaktiven Heissschmelzklebstoffzusammensetzung.

Bevorzugt haben sich Ethylen/Vinylacetat-Copolymere (EVA) erwiesen, insbesondere solche mit einem Vinylacetat-Anteil von unter 50%, insbesondere mit einem Vinylacetat-Anteil zwischen 10 und 40%, bevorzugt 15 bis 30 %.

Die nicht-reaktive Heissschmelzklebstoffzusammensetzung enthält weiterhin vorteilhaft Polyolefine, bei 23°C feste Kohlenwasserstoffharze, Weichharze sowie Maleinsäure-gepfropfte Polyolefine sowie UV- und/oder Wärmestabilisatoren.

Ein bei 23°C festes Kohlenwasserstoffharz weist vorzugsweise einen Erweichungspunkt von 100 bis 140°C, insbesondere zwischen 110 und 130°C, auf. Es hat sich als besonders günstig erwiesen, wenn der Anteil aller bei 23°C festen Kohlenwasserstoffharzen maximal 20 Gew.-%, insbesondere maximal 16 Gew.-%, bevorzugt zwischen 10 und 16 Gew.-%, beträgt, bezogen auf die Heissschmelzklebstoffzusammensetzung.

Ein Weichharz weist einen Erweichungspunkt zwischen -10°C und 40°C auf. Aufgrund der Tatsache, dass sich das Weichharz (WH) bei Raumtemperatur (23°C) sehr nahe am Schmelz- oder Erweichungspunkt befindet, ist es bei Raumtemperatur entweder bereits flüssig oder sehr weich. Ein Weichharz kann ein natürliches Harz oder synthetisches Harz sein. Insbesondere sind derartige Weichharze mittel- bis höhermolekulare Verbindungen aus den Klassen der Parafin-, Kohlenwasserstoffharze, Polyolefine, Polyester, Polyether, Polyacrylate oder Aminoharze. Das Weichharz weist vorzugsweise einen Schmelzpunkt oder Erweichungspunkt zwischen 0°C und 25°C, insbesondere 10°C und 25°C, auf. Die Weichharze werden nur in geringen Mengen eingesetzt. Bevorzugt ist der Anteil aller Weichharze maximal 20 Gew.-%, bezogen auf die Heissschmelzklebstoffzusammensetzung.

Maleinsäure-gepfropfte Polyolefine sind besonders bevorzugt, da sie vorteilhaft in Bezug auf die Haftung sind. Es hat sich als besonders vorteilhaft gezeigt, dass derartige Maleinsäure-gepfropfte Polyolefine Maleinsäure-gepfropfte Polypropylene sind, insbesondere mit einem Molekulargewicht zwischen 7'000 und 14'000 g/mol. Es hat sich als besonders günstig erwiesen, wenn der Anteil aller Maleinsäure-gepfropften Polyolefine maximal 20 Gew.-%, insbesondere maximal 15 Gew.-%, bevorzugt weniger als 10 Gew.-%, beträgt, bezogen auf die Heissschmelzklebstoffzusammensetzung.

Weiterhin kann die nicht-reaktive Heissschmelzklebstoffzusammensetzung weitere Bestandteile aufweisen. Als weitere Bestandteile geeignet sind insbesondere Bestandteile, welche ausgewählt sind aus der Gruppe umfassend Weichmacher, Haftvermittler, UV-Absorptionsmittel, UV- und Wärmestabilisatoren, optische Aufheller, Fungizide, Pigmente, Farbstoffe, Füllstoffe und Trocknungsmittel.

Die nicht-reaktive Heissschmelzklebstoffzusammensetzung weist vorzugsweise einen Schmelzpunkt von 80 bis 200°C, insbesondere von 130 bis 180°C, auf, gemessen als Erweichungspunkt nach der Ring & Kugel-Methode gemäss DIN EN 1238.

Die der in Schritt a) aufgetragenen Menge an nicht-reaktiver Heissschmelzklebstoffzusammensetzung beträgt typischerweise zwischen 50 bis 300 g/m², insbesondere von 100 bis 200 g/m², vorzugsweise 100 bis 150 g/m². Die Schichtdicke der nicht-reaktiven Heissschmelzklebstoffzusammensetzung beträgt vorzugsweise zwischen 50 und 500 Mikrometer, insbesondere zwischen 50 und 100 Mikrometer, beträgt.

Im vorliegenden Verfahren wird in einem dem Schritt a) nachgelagerten Schritt b) die Heissschmelzklebstoff-beschichtete Polyolefin-Abdichtungsfolie auf die Oberfläche eines Bauwerkes des Tiefbaus oder Hochbaus aufgelegt. Das Auflegen der beschichteten Folie erfolgt derart, dass die nicht-reaktiven Heissschmelzklebstoffzusammensetzung zwischen flexible Polyolefin-Abdichtungsfolie und Oberfläche des Bauwerks angeordnet wird.

Die Folie ist auf der Oberfläche aufgrund der Klebfreiheit der Heissschmelzklebstoff-beschichteten Polyolefin-Abdichtungsfolie verschiebbar. Aufgrund des Eigengewichtes der mit Klebstoff beschichten Polyolefin-Abdichtungsfolie wird jedoch für dieses Verschieben einer gewisse Mindestkraft benötigt. Dies ist deshalb von Vorteil, weil dadurch ein nicht gewolltes Verschieben verhindert werden kann. Somit wird zum Beispiel bei abschüssigen Oberflächen ein nichtgewolltes Abrutschen oder ein Wegwinden durch geringe Winde weitgehend verhindert. Die für ein Verschieben notwendige Mindestkraft kann einerseits mit der Wahl der Zusatzstoffe (z.B. Füllstoffe) oder der Foliendicke eingestellt werden oder andererseits kann die Oberflächenstruktur der Heissschmelzklebstoff-beschichteten Polyolefin-Abdichtungsfolie die Haftreibung massgebend beeinflusst werden. So lässt sich beispielsweise die Haftreibung vergrössern durch eine raue Klebstoffoberfläche, welch zum Beispiel das Resultat eines ungleichmässigen Klebstoffauftrages oder eines rastermässigen Klebstoffauftrages ist.

Die Oberfläche des Bauwerks kann aus verschiedenen Materialien bestehen. Insbesondere sind die derartige Oberflächenmaterialien Baumaterialien, wie Beton, Gips, Stein, Backstein, Mörtel, Faserzemente und Natursteine wie Granit oder Marmor; Metalle oder Legierungen wie Aluminium, Stahl, Buntmetalle, verzinkte Metalle; Holz, Isolationsschäume, Polyisocyanuratharze (PIR); beschichtete Substrate wie beschichtete Metalle oder Legierungen; sowie Farben und Lacke. Insbesondere bevorzugt sind Materialien, wie sie als Dachuntergrund zum Einsatz kommen.

Die Substrate können bei Bedarf vor dem Applizieren des Klebstoffes oder Dichtstoffes vorbehandelt werden. Derartige Vorbehandlungen umfassen insbesondere physikalische und/oder chemische Reinigungsverfahren, beispielsweise Schleifen, Sandstrahlen, Bürsten oder dergleichen, oder Behandeln mit Reinigern oder Lösemitteln oder das Aufbringen eines Haftvermittlers, einer Haftvermittlerlösung oder eines Primers.

In einer Ausführungsform der Erfindung wird die im beschriebenen Verfahren ist die Oberfläche 4 eines Bauwerkes 5 des Tiefbaus oder Hochbaus eine mit Heissschmelzklebstoffzusammensetzung beschichtete beschichteten Oberfläche 4', wie sie über den zusätzlichen Schritt a') erhalten wurde:
a') Auftragen einer nicht-reaktiven Heissschmelzklebstoffzusammensetzung 2 auf Oberfläche 4 eines Bauwerkes 5 des Tiefbaus oder Hochbaus.
   Es gilt hierbei jedoch die Massgabe, dass der Schritt a') zeitlich vor dem Schritt b) erfolgt.

In einem weiteren Schritt c) des Verfahrens wird Wärme zugeführt, so dass die nicht-reaktive Heissschmelzklebstoffzusammensetzung anschmilzt.

Das Zuführen von Wärme in Schritt c) erfolgt vorzugsweise derart, dass die Temperatur der Heissschmelzklebstoffzusammensetzung eine Temperatur nicht überschreitet, welche mindestens 30°C, vorzugsweise mindestens 40°C, unter dem Schmelzpunkt, d.h. unter dem Erweichungspunkt, der Heissschmelzklebstoffzusammensetzung liegt.

Das Zuführen der Wärme kann vorzugsweise in Schritt c) während des Auflegens der Heissschmelzklebstoffzusammensetzung-beschichteten Polyolefin-Abdichtungsfolie 3 in Schritt b), insbesondere in den während des Auflegens zwischen Heissschmelzklebstoffzusammensetz ung-beschichteten Polyolefin-Abdichtungsfolie 3 und der Oberfläche 4 eines Bauwerkes 5 gebildeten Spalt 6, erfolgen.

In einer weiteren Ausführungsform erfolgt das das Zuführen von Wärme in Schritt c) auf der der Heissschmelzklebstoffzusammensetzung 2 entgegen gesetzten Seite der Polyolefin-Abdichtungsfolie 1 und wird über die Polyolefin-Abdichtungsfolie 1 (hindurch) auf die Heissschmelzklebstoffzusammensetzung 2 übertragen.

Das Zuführen von Wärme kann durch Heissluft, Flamme, Induktion oder dielektrischer Erwärmung erfolgen. Das Zuführen der Wärme erfolgt vorzugsweise derart, dass die Wärme die Folie, der Klebstoff oder das Material der Oberfläche des Bauwerks thermisch nicht zu stark negativ belastet oder gar zerstört.

Dadurch, dass die Heissschmelzklebstoffzusammensetzung anschmilzt, wird die Heissschmelzklebstoffzusammensetzung zumindest teilweise fliessfähig, wodurch ein inniger Kontakt zur Oberfläche des Bauwerks gewährleistet wird.

Die Erwärmung des Klebstoffs erfolgt dabei insbesondere auf eine Klebstofftemperatur von 70 bis 130°C.

In einem dem Schritt c) nachgelagerten Schritt d) wird die Heissschmelzklebstoffzusammensetzung 2 unter Bildung eines Klebverbundes zwischen flexibler Polyolefin-Abdichtungsfolie 1 und der Oberfläche des Bauwerkes 5 abgekühlt. Dieses Abkühlen erfolgt typischerweise ohne weitere Hilfsmittel. In gewissen Fällen, kann es jedoch angebracht und von Vorteil sein, wenn zum Beispiel der Folie nach kurzer Zeit bereits belastet oder begangen werden soll, das Abkühlen zu beschleunigen. Dies kann beispielsweise erfolgen, indem durch ein Abkühlmittel, beispielsweise durch ein Gebläse, insbesondere ein Luftgebläse, die Folie oder das Bauwerk gekühlt wird.

Durch dieses beschriebene Verfahren wird das Bauwerk des Tiefbaus oder Hochbaus abgedichtet. Diese Abdichtung ist insbesondere eine Abdichtung gegen Wasser, insbesondere gegen Regenwasser oder Bauwasser. Es lassen sich mit diesem Verfahren Bauwerke über längere Zeiträume, typischerweise mehrere Jahre, insbesondere mehr als 10 oder 20 Jahre, verlässlich abdichten.

Somit stellt die Verwendung gemäß Anspruch 11 einer mit einer nicht-reaktiven Heissschmelzklebstoffzusammensetzung-beschichteten flexiblen Polyolefin-Abdichtungsfolie 3, welche bei 25°C klebfrei ist, zum Abdichten eines Bauwerkes des Tiefbaus oder Hochbaus ein weiterer Aspekt der vorliegenden Erfindung dar.

Schliesslich stellt ein Schichtverbundkörper 8 gemäß Anspruch 12 ein weiterer Aspekt der vorliegenden Erfindung dar. Dieser Schichtverbundkörper 8 weist
i) eine Schicht einer flexiblen Polyolefin-Abdichtungsfolie 1
ii) eine Schicht einer nicht-reaktiven
   Heissschmelzklebstoffzusammensetzung 2 und
iii) ein Bauwerk des Tiefbaus oder Hochbaus 5
   auf. Die Schicht der nicht-reaktiven Heissschmelzklebstoffzusammensetzung 2 ist hierbei zwischen der Schicht der flexiblen Polyolefin-Abdichtungsfolie 1 und des Bauwerks des Tiefbaus oder Hochbaus 5 angeordnet.

Insbesondere ist hierbei das Bauwerk 5 des Tiefbaus oder Hochbaus ein Dach.

### Kurze Beschreibung der Zeichnungen

Im Folgenden wird die Erfindung anhand von bevorzugten Ausführungsbeispielen mit Hilfe der Figuren näher beschrieben, wobei darauf hingewiesen wird, dass nur die für das unmittelbare Verständnis der Erfindung wesentlichen Elemente gezeigt sind. Gleiche Elemente sind in den verschiedenen Figuren mit gleichen Bezugszeichen gekennzeichnet. Weiterhin wird darauf hingewiesen, dass es sich bei den hier gezeigten Figuren um schematische Darstellungen ohne Grössenbezüge handelt.

Es zeigen:
- Fig. 1: einen schematischen Querschnitt durch eine flexible Polyolefin-Abdichtungsfolie bzw. -Abdichtungsbahn, auf welcher eine nichtreaktiven Heissschmelzklebstoffzusammensetzung aufgebracht ist;
- Fig. 2: eine schematische Darstellung eines Herstellungsverfahren einer Heissschmelzklebstoff-beschichteten Polyolefin-Abdichtungsfolie: Querschnitt durch eine zu einer Rolle aufgerollten Heissschmelzklebstoff-beschichteten Polyolefin-Abdichtungsfolie;
- Fig. 3: einen schematischen Querschnitt durch einen Schichtverbundkörper bei seiner Herstellung in einer ersten Ausführungsform;
- Fig. 4: einen schematischen Querschnitt durch einen Schichtverbundkörper bei seiner Herstellung in einer zweiten Ausführungsform;
- Fig. 5: einen schematischen Querschnitt durch einen Schichtverbundkörper bei seiner Herstellung in einer dritten Ausführungsform.

Die folgenden Figuren zeigen schematisch einzelne Stufen eines Verfahrens zum Abdichten eines Bauwerkes des Tiefbaus oder Hochbaus:

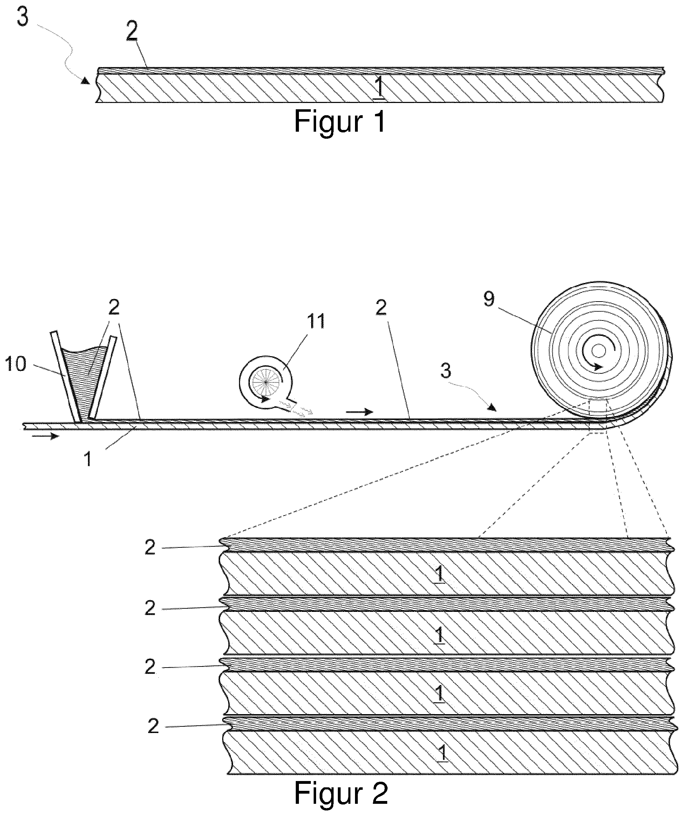

Figur 1 zeigt eine flexible Polyolefin-Abdichtungsfolie 1, auf welche in einem Schritt a) einer flexiblen Polyolefin-Abdichtungsfolie 1 mit einer nicht-reaktiven Heissschmelzklebstoffzusammensetzung 2 aufgetragen wurde beschichtet unter Bildung einer Heissschmelzklebstoff-beschichteten Polyolefin-Abdichtungsfolie 3, welche bei 25°C klebfrei ist. Durch die Klebfreiheit bedingt, ist die der Klebstoff, bzw. die Folie, problemlos rollbar, wie in Fig. 2 beschrieben wird. Ausserdem ist die Folie frei verschiebbar und verklebt nicht ungewollt mit einem Untergrund und ist sehr vorteilhaft darin, dass Staub oder andere kleine Partikel nicht auf der Oberfläche kleben bleiben und die Folienoberfläche so mit verschmutzen bzw. optisch nachteilig beeinflussen würden.

Figur 2 zeigt, dass die Heissschmelzklebstoff-beschichtete Polyolefin-Abdichtungsfolie 3, bzw. -Abdichtungsbahn 3, zu einer Rolle 9 aufgerollt werden können. In der hier gezeigten schematischen Darstellung wird die Heissschmelzklebstoffzusammensetzung 2 aufgeschmolzen und mittels eines Auftraggerätes 10, zum Beispiel einer Breitschlitzdüse, auf die flexiblen Polyolefin-Abdichtungsfolie 1 aufgetragen. Hierbei wird die Polyolefin-Abdichtungsfolie unter dem Auftraggerätes 10 bewegt. Typischerweise wird die Polyolefin-Abdichtungsfolie von einer Rolle (nicht gezeigt) abgewickelt. Um eine schnelle Abkühlung auf Raumtemperatur zu gewährleisten wird in der hier gezeigten Ausführungsform anschliessend an den Auftrag mittels Abkühlmittel 11 (beispielsweise ein Luftgebläse) abgekühlt. Figur 2 zeigt weiterhin, dass so hergestellte Heissschmelzklebstoff-beschichteten Polyolefin-Abdichtungsfolie 3 aufgerollt wird. Weiterhin ist in Figur 2 im unteren Teil ein vergrösserter schematischer Ausschnitt einer Rolle 9 mit aufgerollter Heissschmelzklebstoff-beschichteten Polyolefin-Abdichtungsfolie 3 gezeigt. Durch das Aufrollen der beschichteten Abdichtungsfolie sind die einzelnen Lagen der aufgerollten Heissschmelzklebstoff-beschichteten Polyolefin-Abdichtungsfolie 3 in direktem Kontakt miteinander und weisen insbesondere keine Zwischenlagen eines Trennpapiers auf. Die Heissschmelzklebstoff-beschichteten Polyolefin-Abdichtungsfolie 3 kann bei Bedarf ohne Blocken, auch nach längerer Lagerungs- oder Transportzeit von der Rolle 9 abgewickelt werden. Die Rolle 9 kann platzsparend über längere Zeitabschnitte gelagert und transportiert werden, bei Bedarf im Folienwerk oder auf der Baustelle abgerollt und allenfalls in die gewünschte Bahnlänge abgelängt werden.

In der hier gezeigten Ausführungsform erfolgt das Rollen ohne die Verwendung von eines silikoniserten Trennpapieren, welche beim Aufrollen auf den Klebstoff aufgelegt würden und dann das Verkleben von einzelnen Lagen in der Rolle verhindern würden.

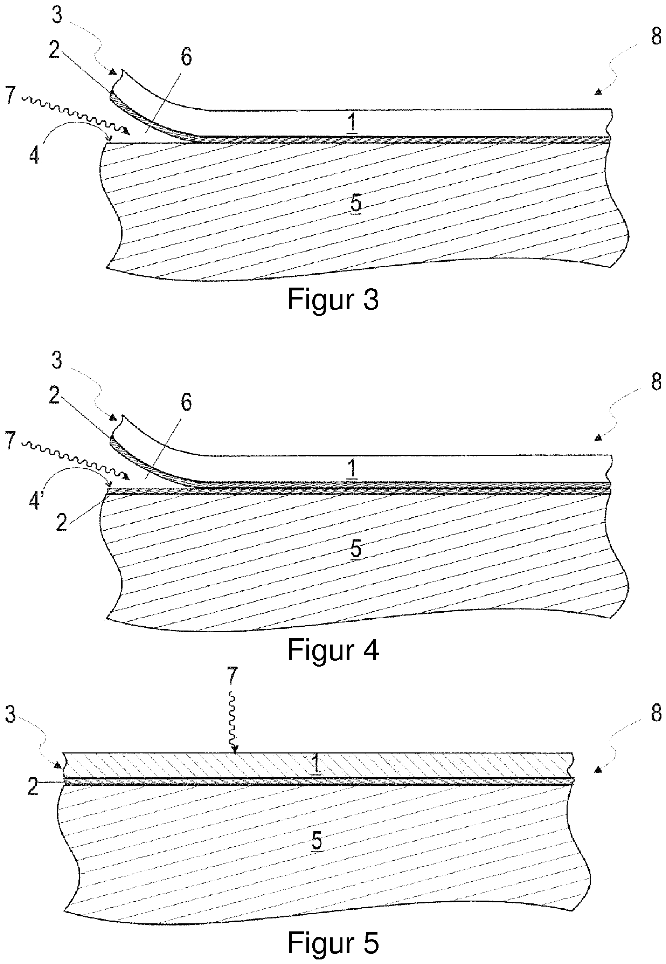

Die Figuren 3 und 4 zeigen die Schritte b) und c) des Verfahrens.

In Figur 3 ist eine erste Ausführungsform dargestellt. Hier wird im Schritt b) die Heissschmelzklebstoff-beschichteten Polyolefin-Abdichtungsfolie 3 auf die Oberfläche 4 eines Bauwerkes 5 des Tiefbaus oder Hochbaus aufgelegt. Aufgrund der Klebfreiheit der Folie kann diese sich auf der Oberfläche 4 bewegt werden, wodurch beispielsweise eine Endpositionierung der Folie ermöglicht wird. Durch das Gewicht der Folie bedingt, ist jedoch eine gewisse Trägheit der Folie vorhanden und verhindert insbesondere weitgehend das ungewollte Verschieben, zum Beispiel durch Abrutschen oder Windeinfluss. Weiterhin zeigt Figur 3 eine Variante des Schrittes c). Hier erfolgt das Zuführen von Wärme in Schritt c) während des Auflegens der Heissschmelzklebstoff-beschichteten Polyolefin-Abdichtungsfolie 3 in Schritt b) in den während des Auflegens zwischen Heissschmelzklebstoff-beschichteten Polyolefin-Abdichtungsfolie 3 und der Oberfläche 4 eines Bauwerkes 5 gebildeten Spalt 6. Durch die Wärme bedingt erfolgt ein Anschmelzen der Heissschmelzklebstoffzusammensetzung 2. Dadurch wird die Heissschmelzklebstoffzusammensetzung weich bzw. leicht klebrig kann sich die Oberfläche 4 des Bauwerks kontaktieren. Im anschliessenden Schritt d) wird die Heissschmelzklebstoffzusammensetzung 2 wieder abgekühlt, wodurch ein Klebverbund zwischen flexibler Polyolefin-Abdichtungsfolie 1 und der Oberfläche des Bauwerkes 5 erfolgt und sich als Resultat ein Schichtverbundkörper 8 bildet. Dieser Schichtverbundkörper 8 weist eine Schicht einer Polyolefin-Abdichtungsfolie 1, eine Schicht einer Heissschmelzklebstoffzusammensetzung 2 sowie ein Bauwerk des Tiefbaus oder Hochbaus 5, auf. Die Schicht der Heissschmelzklebstoffzusammensetzung 2 ist hierbei zwischen der Schicht der Polyolefin-Abdichtungsfolie 1 und des Bauwerks des Tiefbaus oder Hochbaus 5 angeordnet.

Figur 4 stellt eine zweite Ausführungsform dar. Diese entspricht im Wesentliche der Figur 3, ausser das die Oberfläche 4 des Bauwerks eine mit Heissschmelzklebstoffzusammensetzung 2 beschichteten Oberfläche 4' darstellt. Eine derartige Oberfläche 4' wird vor dem Auflegen über den zusätzlichen Schritt a') erhalten. Im Schritt a') wurde eine nicht-reaktiven Heissschmelzklebstoffzusammensetzung 2 auf Oberfläche 4 eines Bauwerkes 5 des Tiefbaus oder Hochbaus aufgetragen und anschliessend wurde der Schritt b) durchgeführt.

Figur 5 stellt eine dritte Ausführungsform dar. Hierbei wird die Wärme mittels einer Wärmequelle 7 in Schritt c) auf der der Heissschmelzklebstoffzusammensetzung 2 entgegen gesetzten Seite der Polyolefin-Abdichtungsfolie 1 zugeführt und wird über die Polyolefin-Abdichtungsfolie 1 auf die Heissschmelzklebstoffzusammensetzung 2 übertragen. Durch die Wärme bedingt erfolgt ein Anschmelzen der Heissschmelzklebstoffzusammensetzung 2. Dadurch wird die Heissschmelzklebstoffzusammensetzung zumindest teilweise fliessend und kann sich die Oberfläche 4 des Bauwerks kontaktieren. Im anschliessenden Schritt d) wird die Heissschmelzklebstoffzusammensetzung 2 wieder abgekühlt, wodurch ein Klebverbund zwischen flexibler Polyolefin-Abdichtungsfolie 1 und der Oberfläche des Bauwerkes 5 erfolgt und sich als Resultat, wie in Figur 4 beschrieben, einen Schichtverbundkörper 8 bildet.

### Beispiele

Im Folgenden wird die Erfindung auch noch anhand von Beispielen illustriert.

Eine mit Polyester-Gittergelege verstärkte flexible Polyolefin-Abdichtungsfolie Sarnafil® TS 77-18, erhältlich von Sika Sarnafil AG, Schweiz, der Dicke von 1.8 mm, wurde mittels Rakel der durch Erhitzen auf 180°C geschmolzene, nicht-reaktive Heissschmelzklebstoff SikaMelt®-9171, erhältlich bei Sika Automotive GmbH, Deutschland, in einer Menge von 150g/m² appliziert. Nach dem Abkühlen auf Raumtemperatur wurde die so beschichtete Klebstoff-beschichtete flexible Polyolefin-Folie wurden in 5 x 20 cm grosse Streifen geschnitten.

Die so hergestellte Klebstoff-beschichtete flexible Polyolefin-Folie war bei 23°C klebfrei, wie durch Aufstreuen von Kreidepulver festgestellt wurde. Beim Aufstellen der Folie fiel das gesamte Kreidepulver von der Oberfläche des Klebstoffs weg, so dass visuell keine Kreide mehr an der Oberfläche entdeckt werden konnte.

Die so hergestellten Klebstoff-beschichtete flexible Polyolefin-Folienstreifen wurden auf eine Beton-Gartenwegplatte, beziehungsweise auf ein Zinkblech, gelegt, so dass die Klebstoffbeschichtete Seite in Kontakt mit dem zu verklebenden Substrat gelangte. Der Streifen wurde angehoben und mittels Heissluftföhn bzw. Flamme heisse Luft in den Spalt geblasen, so dass die im Klebstoff gemessene Temperatur zwischen 115°C und 135 °C betrug und und mit einer 5 kg Rolle verpresst. Sofort nach dem Abkühlen des Verbundes auf Raumtemperatur wurde mit einer Zugprüfmaschine die Schälfestigkeit gemessen (Winkel 90°, Vorschubgeschwindigkeit 100 mm/min) und in Tabelle 1 angegeben.

SikaMelt®-9171 weist einen Erweichungspunkt, gemessen nach der Ring & Kugel-Methode gemäss DIN EN 1238, von 160 °C auf und eine Crossover-Temperatur, bestimmt über DTMA, nach der Methode, wie sie vorgängig beschrieben wurde, von 109°C.

**Tabelle 1. Schälfestigkeiten von verklebten Substraten**

| | Heissluftföhn | | Flamme | |
|---|---|---|---|---|
| | Beton | Zn-Blech | Beton | Zn-Blech |
| Schälfestigkeit [N/5cm] | 90 | 366 | > 100 | 413 |

### Bezugszeichenliste

- 1: flexiblen Polyolefin-Abdichtungsfolie bzw. -Abdichtungsbahn
- 2: nicht-reaktive Heissschmelzklebstoffzusammensetzung
- 3: Heissschmelzklebstoff-beschichteten Polyolefin-Abdichtungsfolie
- 4: Oberfläche
- 4': mit Heissschmelzklebstoff 2 beschichtete Oberfläche
- 5: Bauwerk des Tiefbaus oder Hochbaus
- 6: Spalt
- 7: Wärmequelle
- 8: Schichtverbundkörper
- 9: Rolle
- 10: Auftragsgerät
- 11: Abkühlmittel

## Patentansprüche

1. Verfahren zum Abdichten eines Bauwerkes des Tiefbaus oder Hochbaus umfassend die Schritte
a) Beschichten einer flexiblen Polyolefin-Abdichtungsfolie (1) mit einer nicht-reaktiven Heissschmelzklebstoffzusammensetzung (2) unter Bildung einer Heissschmelzklebstoffzusammensetzung-beschichteten Polyolefin-Abdichtungsfolie (3), welche bei 25°C klebfrei ist;
b) Auflegen der Heissschmelzklebstoffzusammensetzung-beschichteten Polyolefin-Abdichtungsfolie (3) auf die Oberfläche (4) eines Bauwerkes (5) des Tiefbaus oder Hochbaus;
c) Zuführen von Wärme unter Anschmelzen der nicht-reaktiven Heissschmelzklebstoffzusammensetzung (2);
d) Abkühlen der nicht-reaktiven Heissschmelzklebstoffzusammensetzung (2) unter Bildung eines Klebverbundes zwischen flexibler Polyolefin-Abdichtungsfolie (1) und der Oberfläche des Bauwerkes (5)
wobei die nicht-reaktive Heissschmelzklebstoffzusammensetzung frei von Epoxidharz ist, und wobei die nicht-reaktive Heissschmelzklebstoffzusammensetzung keine Polymere aufweist, die chemisch miteinander weder bei Raumtemperatur noch bei der Schmelztemperatur reagieren und zu höher molekularen Spezies führen würden und die nicht-reaktive Heissschmelzklebstoffzusammensetzung keine Epoxidharze enthält.

2. Verfahren gemäss Anspruch 1, **dadurch gekennzeichnet, dass** der nichtreaktive Heissschmelzklebstoffzusammensetzung ein bei 25°C festes thermoplastisches Poly-α-olefin, bevorzugt ein ataktisches Poly-α-olefin (APAO), ist, insbesondere in einer Menge von mehr als 50 Gew.-%, bevorzugt von mehr als 60 Gew.-%, bezogen auf die Menge der nicht-reaktiven Heissschmelzklebstoffzusammensetzung.

3. Verfahren gemäss Anspruch 1, **dadurch gekennzeichnet, dass** der nichtreaktive Heissschmelzklebstoffzusammensetzung ein bei 25°C festes Copolymer enthält, welches aus der radikalischen Polymerisation von mindestens zwei Monomeren mit mindestens einer, vorzugsweise einer, ungesättigten C=C-Doppelbindung erhalten wird, bevorzugt ein Ethylen/Vinylacetat-Copolymer, enthält, insbesondere in einer Menge von mehr als 50 Gew.-%, bevorzugt von mehr als 60 Gew.-%, bezogen auf die Menge der nicht-reaktiven Heissschmelzklebstoffzusammensetzung.

4. Verfahren gemäss einem der vorhergehenden Ansprüche, **dadurch gekennzeichnet, dass** die nicht-reaktive Heissschmelzklebstoffzusammensetzung einen Schmelzpunkt von 80 bis 200°C, insbesondere von 130 bis 180°C, aufweist.

5. Verfahren gemäss einem der vorhergehenden Ansprüche, **dadurch gekennzeichnet, dass** die nicht-reaktive Heissschmelzklebstoffzusammensetzung (2) in Schritt a) in einer Menge von 50 bis 300 g/m² , insbesondere von 100 bis 200 g/m², aufgetragen wird.

6. Verfahren gemäss einem der vorhergehenden Ansprüche, **dadurch gekennzeichnet, dass** die Oberfläche (4) eines Bauwerkes (5) des Tiefbaus oder Hochbaus eine mit Heissschmelzklebstoffzusammensetzung-beschichtete Oberfläche (4') ist, wie sie über den zusätzlichen Schritt a') erhalten wurden a') Auftragen einer nicht-reaktiven Heissschmelzklebstoffzusammensetzung (2) auf Oberfläche (4) eines Bauwerkes (5) des Tiefbaus oder Hochbaus; mit der Massgabe, dass der Schritt a') zeitlich vor dem Schritt b) erfolgt.

7. Verfahren gemäss einem der vorhergehenden Ansprüche, **dadurch gekennzeichnet, dass** das Zuführen von Wärme in Schritt c) während des Auflegens der Heissschmelzklebstoffzusammensetzung-beschichteten Polyolefin-Abdichtungsfolie (3) in Schritt b), insbesondere in den während des Auflegens zwischen Heissschmelzklebstoffzusammensetzung-beschichteten Polyolefin-Abdichtungsfolie (3) und der Oberfläche (4) eines Bauwerkes (5) gebildeten Spalt (6), erfolgt.

8. Verfahren gemäss einem der vorhergehenden Ansprüche, **dadurch gekennzeichnet, dass** das Zuführen von Wärme in Schritt c) auf der der Heissschmelzklebstoffzusammensetzung (2) entgegen gesetzten Seite der Polyolefin-Abdichtungsfolie (1) erfolgt und über die Polyolefin-Abdichtungsfolie (1) auf die Heissschmelzklebstoffzusammensetzung (2) übertragen wird.

9. Verfahren gemäss einem der vorhergehenden Ansprüche, **dadurch gekennzeichnet, dass** das Zuführen von Wärme in Schritt c) derart erfolgt, dass die Temperatur der Heissschmelzklebstoffzusammensetzung eine Temperatur nicht überschreitet, welche mindestens 30 °C, vorzugsweise mindestens 40°C, unter dem Schmelzpunkt der Heissschmelzklebstoffzusammensetzung (2) liegt.

10. Verfahren gemäss einem der vorhergehenden Ansprüche, **dadurch gekennzeichnet, dass** die flexible Polyolefin-Abdichtungsfolie (1) mit einem Gewebe verstärkt, ist.

11. Verwendung einer mit einer nicht-reaktiven
Heissschmelzklebstoffzusammensetzung-beschichteten flexiblen Polyolefin-Abdichtungsfolie (3), welche bei 25°C klebfrei ist, zum Abdichten eines Bauwerkes des Tiefbaus oder Hochbaus, wobei die nicht-reaktive Heissschmelzklebstoffzusammensetzung keine Polymere aufweist, die chemisch miteinander weder bei Raumtemperatur noch bei der Schmelztemperatur reagieren und zu höher molekularen Spezies führen würden und die nicht-reaktive Heissschmelzklebstoffzusammensetzung keine Epoxidharze enthält.

12. Schichtverbundkörper (8), welcher
i) eine Schicht einer flexiblen Polyolefin-Abdichtungsfolie (1)
ii) eine Schicht einer nicht-reaktiven
Heissschmelzklebstoffzusammensetzung (2) und
iii) ein Bauwerk des Tiefbaus oder Hochbaus (5)
aufweist, wobei die Schicht der nicht-reaktiven Heissschmelzklebstoffzusammensetzung (2) zwischen der Schicht der flexiblen Polyolefin-Abdichtungsfolie (1) und des Bauwerks des Tiefbaus oder Hochbaus (5) angeordnet ist, und wobei die nicht-reaktive Heissschmelzklebstoffzusammensetzung frei von Epoxidharz ist, und wobei die nicht-reaktive Heissschmelzklebstoffzusammensetzung keine Polymere aufweist, die chemisch miteinander weder bei Raumtemperatur noch bei der Schmelztemperatur reagieren und zu höher molekularen Spezies führen würden und die nicht-reaktive Heissschmelzklebstoffzusammensetzung keine Epoxidharze enthält.

13. Schichtverbundkörper (8) gemäss Anspruch 12, **dadurch gekennzeichnet, dass**, das Bauwerk (5) des Tiefbaus oder Hochbaus ein Dach ist.

## Claims

1. Process for sealing an underground or above-ground construction, including the steps:
a) Coating a flexible polyolefin sealing film (1) with a non-reactive hot melt adhesive compound (2) to form a hot melt adhesive compound coated polyolefin sealing film (3), which is non-tacky at 25° C;
b) Laying the hot melt adhesive compound coated polyolefin sealing film (3) on the surface (4) of an underground or above-ground construction (5) ;
c) Adding heat to partially melt the non-reactive hot melt adhesive compound (2);
d) Cooling the non-reactive hot melt adhesive compound (2) to form an adhesive bond between the flexible polyolefin sealing film (1) and the surface of the construction (5),
wherein the non-reactive hot melt adhesive compound contains no epoxy resin, and wherein the non-reactive hot melt adhesive compound does not include any polymers that react chemically with one another either at room temperature or at the melting temperature and would lead to species of higher molecular weight, and the non-reactive hot melt adhesive compound does not contain any epoxy resins.

2. Process according to Claim 1, **characterized in that** the non-reactive hot melt adhesive compound is a thermoplastic poly-α-olefin solid at 25° C, preferably an atactic poly-α-olefin (APAO), in particular in a quantity of more than 50% by weight, preferably more than 60% by weight, based on the quantity of the non-reactive hot melt adhesive compound.

3. Process according to Claim 1, **characterized in that** the non-reactive hot melt adhesive compound contains a copolymer that is solid at 25 ° C, which is obtained by free radical polymerization of at least two monomers with at least one, preferably one, unsaturated C=C double bond, preferably an ethylene-vinyl acetate copolymer, in particular in a quantity of more than 50% by weight, preferably more than 60% by weight, based on the quantity of the non-reactive hot melt adhesive compound.

4. Process according to one of the preceding claims, **characterized in that** the non-reactive hot melt adhesive compound has a melting point of 80 to 200° C, in particular of 130 to 180° C.

5. Process according to one of the preceding claims, **characterized in that** the non-reactive hot melt adhesive compound (2) in step a) is applied in an amount of 50 to 300 g/m², in particular of 100 to 200 g/m².

6. Process according to one of the preceding claims, **characterized in that** the surface (4) of an underground or above-ground construction (5) is a surface (4') coated with hot melt adhesive compound, as obtained through the additional step a')
a') Applying a non-reactive hot melt adhesive compound (2) to the surface (4) of an underground or above-ground construction (5);
with the provision that step a') takes place before step b).

7. Process according to one of the preceding claims, **characterized in that** the introduction of heat in step c) occurs during the application of the hot melt adhesive compound coated polyolefin sealing film (3) in step b), in particular into the gap (6) formed during the application between the hot melt adhesive compound coated polyolefin sealing film (3) and the surface (4) of a construction (5).

8. Process according to one of the preceding claims, **characterized in that** the introduction of heat in step c) takes place on the side of the polyolefin sealing film (1) opposite from the hot melt adhesive compound (2), and is transferred onto the hot melt adhesive compound (2) through the polyolefin sealing film (1).

9. Process according to one of the preceding claims, **characterized in that** the introduction of heat in step c) occurs in such a way that the temperature of the hot melt adhesive compound does not exceed a temperature that is at least 30° C, preferably at least 40° C, below the melting point of the hot melt adhesive compound (2).

10. Process according to one of the preceding claims, **characterized in that** the flexible polyolefin sealing film (1) is reinforced with a fabric.

11. Use of a non-reactive hot melt adhesive compound coated flexible polyolefin sealing film (3), which is non-tacky at 25° C, for sealing an underground or above-ground construction, wherein the non-reactive hot melt adhesive compound does not include any polymers that react chemically with one another either at room temperature or at the melting temperature and would lead to species of higher molecular weight, and the non-reactive hot melt adhesive compound does not contain any epoxy resins.

12. Composite (8), which has
i) a layer of a flexible polyolefin sealing film (1)
ii) a layer of a non-reactive hot melt adhesive compound (2), and
iii) an underground or above-ground construction (5),
wherein the layer of the non-reactive hot melt adhesive compound (2) is disposed between the layer of the flexible polyolefin sealing film (1) and the underground or above-ground construction (5), and wherein the non-reactive hot melt adhesive compound is free of epoxy resin, and wherein the non-reactive hot melt adhesive compound does not include any polymers that react chemically with one another either at room temperature or at the melting temperature and would lead to species of higher molecular weight, and the non-reactive hot melt adhesive compound does not contain any epoxy resins.

13. Composite (8) according to Claim 12, **characterized in that** the underground or above-ground construction (5) is a roof.

## Revendications

1. Procédé pour étanchéifier une construction souterraine ou en hauteur, comprenant les étapes de
a) revêtement d'une feuille (1) d'étanchéité souple à base de polyoléfine par une composition (2) adhésive thermofusible non réactive avec formation d'une feuille (3) d'étanchéité à base de polyoléfine, revêtue par une composition adhésive thermofusible, qui est non collante à 25°C ;
b) application de la feuille (3) d'étanchéité à base de polyoléfine, revêtue par une composition adhésive thermofusible, sur la surface (4) d'une construction (5) souterraine ou en hauteur ;
c) apport de chaleur avec fusion de la composition (2) adhésive thermofusible non réactive ;
d) refroidissement de la composition (2) adhésive thermofusible non réactive avec formation d'un assemblage collé entre la feuille (1) d'étanchéité souple à base de polyoléfine et la surface de la construction (5),
la composition adhésive thermofusible non réactive étant exempte de résine époxyde et la composition adhésive thermofusible non réactive ne présentant pas de polymères qui réagissent chimiquement l'un avec l'autre, ni à la température ambiante, ni à la température de fusion et qui conduiraient à des espèces moléculaires supérieures et la composition adhésive thermofusible non réactive ne contenant pas de résines époxydes.

2. Procédé selon la revendication 1, **caractérisé en ce que** la composition adhésive thermofusible non réactive est une poly-α-oléfine solide à 25°C, thermoplastique, de préférence une poly-α-oléfine atactique (APAO), en particulier en une quantité supérieure à 50% en poids, de préférence supérieure à 60% en poids, par rapport à la quantité de la composition adhésive thermofusible non réactive.

3. Procédé selon la revendication 1, **caractérisé en ce que** la composition adhésive thermofusible non réactive contient un copolymère solide à 25°C, qui est obtenu par polymérisation par voie radicalaire d'au moins deux monomères présentant au moins une, de préférence une, double liaison C=C insaturée, de préférence un copolymère d'éthylène/acétate de vinyle, en particulier en une quantité supérieure à 50% en poids, de préférence supérieure à 60% en poids, par rapport à la quantité de la composition adhésive thermofusible non réactive.

4. Procédé selon l'une quelconque des revendications précédentes, **caractérisé en ce que** la composition adhésive thermofusible non réactive présente un point de fusion de 80 à 200°C, en particulier de 130 à 180°C.

5. Procédé selon l'une quelconque des revendications précédentes, **caractérisé en ce que** la composition (2) adhésive thermofusible non réactive dans l'étape a) est appliquée en une quantité de 50 à 300 g/m², en particulier de 100 à 200 g/m².

6. Procédé selon l'une quelconque des revendications précédentes, **caractérisé en ce que** la surface (4) d'une construction (5) souterraine ou en hauteur est une surface (4') revêtue d'une composition adhésive thermofusible, telle qu'elle a été obtenue via l'étape supplémentaire a')
a') application d'une composition (2) adhésive thermofusible non réactive à la surface (4) d'une construction (5) souterraine ou en hauteur ;
à condition que l'étape a') se déroule avant l'étape b) dans le temps.

7. Procédé selon l'une quelconque des revendications précédentes, **caractérisé en ce que** l'apport de chaleur dans l'étape c) a lieu pendant l'application de la feuille (3) d'étanchéité à base de polyoléfine revêtue par la composition adhésive thermofusible dans l'étape b), en particulier dans la fente (6) formée, lors de l'application, entre la feuille (3) d'étanchéité à base de polyoléfine revêtue par la composition adhésive thermofusible et la surface (4) d'une construction (5).

8. Procédé selon l'une quelconque des revendications précédentes, **caractérisé en ce que** l'apport de chaleur dans l'étape c) a lieu sur le côté de la feuille (1) d'étanchéité à base de polyoléfine opposé à la composition (2) adhésive thermofusible et est transféré via la feuille (1) d'étanchéité à base de polyoléfine à la composition (2) adhésive thermofusible.

9. Procédé selon l'une quelconque des revendications précédentes, **caractérisé en ce que** l'apport de chaleur dans l'étape c) a lieu de manière telle que la température de la composition adhésive thermofusible ne dépasse pas une température qui est située au moins 30°C, de préférence au moins 40°C, sous le point de fusion de la composition (2) adhésive thermofusible.

10. Procédé selon l'une quelconque des revendications précédentes, **caractérisé en ce que** la feuille (1) d'étanchéité souple à base de polyoléfine est renforcée par un tissu.

11. Utilisation d'une feuille (3) d'étanchéité souple à base de polyoléfine revêtue par une composition adhésive thermofusible non réactive, qui est non collante à 25°C, pour l'étanchéification d'une construction souterraine ou en hauteur, la composition adhésive thermofusible non réactive ne présentant pas de polymères qui réagissent chimiquement l'un avec l'autre, ni à la température ambiante, ni à la température de fusion et qui conduiraient à des espèces moléculaires supérieures et la composition adhésive thermofusible non réactive ne contenant pas de résines époxydes.

12. Corps composite à couches (8) présentant
(i) une couche d'une feuille (1) d'étanchéité souple à base de polyoléfine
(ii) une couche d'une composition (2) adhésive thermofusible non réactive et
(iii) une construction souterraine ou en hauteur (5) la couche de la composition (2) adhésive thermofusible non réactive étant disposée entre la couche de la feuille (1) d'étanchéité souple à base de polyoléfine et la construction (5) souterraine ou en hauteur et la composition adhésive thermofusible non réactive étant exempte de résine époxyde et la composition adhésive thermofusible non réactive ne présentant pas de polymères qui réagissent chimiquement l'un avec l'autre, ni à la température ambiante, ni à la température de fusion et qui conduiraient à des espèces moléculaires supérieures et la composition adhésive thermofusible non réactive ne contenant pas de résines époxydes.

13. Corps composite à couches (8) selon la revendication 12, **caractérisé en ce que** la construction (5) souterraine ou en hauteur est un toit.
